# EUROPÄISCHE PATENTANMELDUNG

(11) **EP 2 093 563 A2**
(43) Veröffentlichungstag der Anmeldung: **26.08.2009**
(21) Anmeldenummer: 09153145.9
(22) Anmeldetag: 18.02.2009
(51) Int. Cl.: G01N 29/22, G01N 29/28, G01N 29/24

(54) **Vorrichtung und Verfahren zur Überwachung eines heissen Prüfkörpers auf Materialfehler mittels Ultraschall sowie Herstellverfahren**

(30) Priorität: 22.02.2008 DE 102008010546
(71) Anmelder: Fraunhofer-Gesellschaft zur Förderung der angewandten Forschung e.V., 80686 München (DE)
(72) Erfinder: Brunner, Bernhard, 97250, Erlabrunn (DE); Keil, Gennadij, 97855 Triefenstein (DE); Durschang, Bernd, 97228 Rottendorf (DE); Krüger, Reinhard, 97082 Würzburg (DE); Roth, Holger, 97534 Theilheim (DE)
(74) Vertreter: Kastel, Stefan

(57) **Zusammenfassung**

Die Erfindung betrifft eine Überwachungsvorrichtung (28) und ein Überwachungsverfahren zur Überwachung eines Prüfkörpers (20) auf Materialfehler mit einem Ultraschallwandler (10) und einer Koppeleinrichtung (18) zum Koppeln des Ultraschallwandlers (10) an den Prüfkörper (20), um Ultraschallwellen zwischen dem Prüfkörper und dem Ultraschallwandler zu übertragen. Um eine dauerhafte Überwachung auch heißer Prüfkörper durchführen zu können, wird vorgeschlagen, dass der Ultraschallwandler (10) ein Hochtemperatur-Piezomaterial (12) aufweist, das dauerhaft bei Temperaturen oberhalb von etwa 500°C einsetzbar ist, und dass die Koppeleinrichtung (18) eine Glas-, Glaslot-, Aktiv- oder Hartlot- oder Keramikverbindung aufweist, mittels der der Ultraschallwandler (10) dauerhaft auch bei Betriebstemperaturen oberhalb von etwa 500°C an dem Prüfkörper (20) befestigbar ist. Weiterhin wird ein vorteilhaftes Herstellverfahren für eine solche Überwachungsvorrichtung (28) beschrieben.

## Beschreibung

Die Erfindung betrifft eine Überwachungsvorrichtung zur Überwachung eines Prüfkörpers auf Materialfehler mit einem Ultraschallwandler und einer Koppeleinrichtung zum Koppeln des Ultraschallwandlers an einen Prüfkörper, um so Ultraschallwellen zwischen dem Prüfkörper und dem Ultraschallwandler zu übertragen. Außerdem betrifft die Erfindung ein Überwachungsverfahren zur Strukturüberwachung des Prüfkörpers unter Verwendung der Überwachungsvorrichtung. Schließlich betrifft die Erfindung ein Herstellverfahren für eine solche Überwachungsvorrichtung.

Bei Verwendung eines Ultraschallwandlers kann eine akustische Schallsignaturanalyse durchgeführt werden. Mittels "Abhören" des Bauteiles werden charakteristische Töne bei Rissausbreitung, Delamination von Fasereinzellagen oder Faserrisse in Kunststoff-Faserverbundbauteilen aufgenommen und aufgrund ihres typischen Frequenzspektrums dem Fehler zugeordnet.

Bei Verwendung von mehreren Wandlern wird es möglich, nicht nur eine erweiterte Fehleranalyse - z.B. ein Nachweis eines Wandabtrages bei Korrosionsvorgängen - sondern auch eine Ortung des Fehlers durchzuführen. Dabei sendet immer einer der Wandler in einem Frequenzbereich, der typisch für die auftretenden Fehler ist, während der oder die anderen Wandler als Empfänger dieses Pulssignal aufzeichnen. Durch Permutation aller Wandler wird somit eine hohe Ortsempfindlichkeit im Bereich der Wellenlänge des Abtastsignals erreicht. Bei den typischerweise eingesetzten Ultraschallfrequenzen wird somit eine Ortsempfindlichkeit im Bereich einiger cm erreicht. Die Änderung in der Signalform entspricht der Charakteristik des entstehenden Fehlers. Bei Anwendung des Verfahrens z.B. auf Faserverbundmaterial kann eine Amplitudenänderung auf eine Delamination im Faserverbundmaterial hindeuten, da sich die Verbindung zwischen den Faserlagern reduziert. Die Signalform ändert sich bei Rissentstehung - hier wird beispielsweise ein Echo gebildet - oder bei Dichteänderungen im Prüfkörper.

Akustische Schallsignaturanalysen können zur Strukturüberwachung an sicherheitsrelevanten Bauteilen in einem Luft- oder Raumfahrzeug, beispielsweise an einem Flugzeug, an Rotorblättern von Windkraftanlagen oder an Behältern oder Rohrleitungen eingesetzt werden. Dabei können sehr unterschiedliche Materialien überwacht werden, beispielsweise auch Metalle.

Bisher können solche akustischen Schallsignaturanalysen nur bei relativ geringen Temperaturen der Prüfkörper eingesetzt werden. Normale piezoelektrische Ultraschallwandler können bis höchstens 150° C eingesetzt werden. Daher ist die Überwachung heißerer Prüfkörper nur sehr kurzzeitig meist durch Anpressen des Wandlers über einige Sekunden an den Prüfkörper möglich.

Aufgabe der Erfindung ist, eine Überwachungsvorrichtung und ein Überwachungsverfahren zur kontinuierlichen Überwachung von Prüfkörpern mittels akustischer Schallanalyse zur Verfügung zu stellen, welches auch bei hohen Temperaturen des Prüfkörpers einsetzbar ist.

Diese Aufgabe wird durch eine Überwachungsvorrichtung mit den Merkmalen des hier beigefügten Patentanspruches 1 und ein Überwachungsverfahren mit den Schritten des Anspruches 11 gelöst.

Vorteilhafte Ausgestaltungen der Erfindung sind Gegenstand der Unteransprüche.

Ein vorteilhaftes Herstellverfahren für die Überwachungsvorrichtung ist Gegenstand des weiteren Nebenanspruches.

Die Erfindung schafft eine Überwachungsvorrichtung zur Überwachung eines Prüfkörpers auf Materialfehler mit einem Ultraschallwandler und einer Koppeleinrichtung zum Koppeln des Ultraschallwandlers an den Prüfkörper, um Ultraschallwellen zwischen dem Prüfkörper und dem Ultraschallwandler zu übertragen, wobei der Ultraschallwandler ein Hochtemperatur-Piezomaterial aufweist, das dauerhaft bei Temperaturen oberhalb von etwa 500°C, insbesondere oberhalb von 650°C und mehr insbesondere zwischen etwa 650°C und 1000°C einsetzbar ist, und wobei die Koppeleinrichtung eine Glas- oder Glaslot-, Aktiv- oder Hartlot- oder Keramikverbindung aufweist, mittels der der Ultraschallwandler dauerhaft auch bei Betriebstemperaturen oberhalb von etwa 500°C, insbesondere oberhalb von etwa 650°C an dem Prüfkörper befestigbar ist.

Vorzugsweise wird ein Glaslot oder Glas als Befestigungs- und Koppelmittel eingesetzt, das eine Schmelztemperatur oberhalb von etwa 500°C mehr insbesondere oberhalb von etwa 650°C hat. Dadurch bleibt das Glaslot bzw. Glas auch bei Betriebstemperatur oberhalb von 500°C, insbesondere oberhalb etwa 650°C in festem Zustand und hält den Ultraschallwandler auch bei diesen Temperaturen an dem Prüfkörper fest. Damit kann auf aufwändige zusätzliche Befestigungen verzichtet werden.

Mit einer solchen Überwachungsvorrichtung ist auch eine dauerhafte Überwachung eines Prüfkörpers, der bei Temperaturen oberhalb von 500°C eingesetzt wird, möglich. Solche Prüfkörper können heiße Bauteile in Luftfahrzeugen, heiße Bauteile in Maschinen oder in Industrieanlagen oder Behälter oder Rohrleitungen sein. Diese beispielhafte Aufzählung ist nicht abschließend.

Durch die Verwendung eines Hochtemperatur-Piezomaterials lässt sich der piezoelektrische Effekt zur Umwandlung von elektrischen Signalen in mechanische Schwingungen oder umgekehrt auch bei hohen Temperaturen ausnutzen. Um die mechanischen Schwingungen in den Prüfkörper einkoppeln zu können, wird hierzu ebenfalls eine für solch hohe Temperaturen ausgelegte Koppeleinrichtung verwendet. Diese nutzt bevorzugt eine Glaslotverbindung, die weiter bevorzugt gleichzeitig als (einziges) Befestigungsmittel für den Ultraschallwandler an dem Prüfkörper eingesetzt wird. In alternativen Ausgestaltungen sind auch Keramikverbindungen und Aktivlotverbindungen oder Hartlotverbindungen möglich. Die Koppeleinrichtung kann ein kristallisierendes Glaslot aufweisen. Die Koppeleinrichtung kann insbesondere auch oder auch ganz aus den die Ultraschallwandler mit dem Prüfkörper verbindenden Material gebildet sein. Zum Beispiel ist die Koppeleinrichtung ein (zum Beispiel kristallisierendes) Glaslot.

Besonders bevorzugt ist die Überwachungsvorrichtung für Temperaturen oberhalb von etwa 600° C, mehr insbesondere oberhalb von etwa 650° C ausgelegt. Mit den bislang herstellbaren und auf dem Markt erhältlichen Hochtemperatur-Piezomaterialen und vorteilhaften Koppeleinrichtungen sind dauerhafte Schallsignaturanalysen bei Betriebstemperaturen des Prüfkörpers von etwa bis zu 1000° C möglich.

Hierzu werden vorzugsweise als Einkristall ausgebildete Hochtemperatur-Piezomaterialien verwendet, die eine Schmelztemperatur und/oder eine Curietemperatur oberhalb von etwa 1000° C aufweisen.

Insbesondere eignen sich hierzu Materialen aus der Gruppe der Langasite. Vorzugsweise ist das piezoelektrische Material aus einer Gruppe ausgewählt, die Langasit, Langanat und/oder Langatat umfasst. Vorzugsweise ist das Hochtemperatur-Piezomaterial ausgewählt aus einer Gruppe von Hochtemperatur-Piezomaterialien, die La₃Ga₅SiO₁₄, La₃Ga_{5.5}Ta_{0.5}O₁₄, La₃Ga_{5.5}Nb_{0.5}O₁₄, Ca₃Ga₂Ge₄O₁₄ und GaPO₄ umfasst. Mit diesen Materialien eignet sich die Überwachungsvorrichtung für einen sehr weiten Temperaturbereich. Insbesondere ist die Überwachungsvorrichtung auch bei Prüfkörper-Temperaturen oberhalb von etwa 500° C, je nach Material auch oberhalb von ca. 600° C geeignet.

Um einer Korrosion von elektrischen Anschlusselementen bei solch hohen Temperaturen vorzubeugen, weist der Ultraschallwandler vorzugsweise Elektroden oder sonstige Kontaktelemente, insbesondere Kontaktdrähte, aus Edelmetall auf. Beispielsweise sind Goldelektroden oder Platinelektroden eingesetzt.

Um die kurzen Schallpulse bei der Schallsignaturanalyse abzudämpfen, weist der Ultraschallwandler weiter vorzugsweise einen Dämpfungskörper auf. Dieser Dämpfungskörper ist bevorzugt auf einer dem Prüfkörper abgewandten Seite des Piezomaterials mit einer zu der Glaslot-, Aktivlot- oder Hartlot- oder Keramikverbindung der Koppeleinrichtung gleichartigen Verbindung befestigt. Weist beispielsweise die Koppeleinrichtung als Koppelmaterial und Befestigungsmaterial Glas oder Glaslot auf, dann ist auch der Dämpfungskörper mittels Glas bzw. Glaslot auf dem Piezomaterial befestigt. Dies erleichtert die Herstellung, da alle Verbindungen in einem einzelnen Schritt herstellbar sind.

Besonders bevorzugt dient ein Glas oder Glaslot sowohl als Koppelmedium zum Einkoppeln von Ultraschallwellen aus dem Ultraschallwandler in den Prüfkörper oder umgekehrt als auch zusätzlich als (einziges) Befestigungsmittel, mittels dem der Ultraschallwandler dauerhaft an dem Prüfkörper befestigt ist. Das Glas oder Glaslot hat vorzugsweise einen Schmelzpunkt oberhalb von etwa 650°C, insbesondere zwischen 650°C und 1000°C.

Wie oben bereits erwähnt, können bereits ganz unterschiedliche Materialien des Prüfkörpers mittels der Überwachungsvorrichtung überwacht werden. Unterschiedliche thermische Ausdehnungskoeffizienten des Prüfkörpers zum Wandler können durch entsprechende Verbindungsmittel, wie insbesondere Glaslote, mit passenden thermischen Ausdehnungskoeffizienten angepasst werden.

Als ein Entscheidungskriterium wird ein Verbindungsmittel, wie insbesondere das Glaslot, aufgrund seines thermischen Ausdehnungskoeffizienten ausgewählt. Der thermische Ausdehnungskoeffizient sollte beispielsweise so sein, dass bei den auftretenden Betriebstemperaturen das Glaslot nicht auf Zug, sondern auf Druck belastet wird. Gläser halten relativ hohe Druckspannungen, jedoch nur geringe Zugspannung aus. Daher ist der thermische Ausdehnungskoeffizient des Glases vorzugsweise derart auszuwählen, dass bei der Herstellung der Überwachungsvorrichtung und insbesondere bei der Anbringung der Ultraschallwandler an dem Prüfkörper eine Druckspannung in dem Glas eingefroren wird, die auch bei Erhöhung der Temperatur in den hier interessierenden Temperaturbereichen weiterhin auf Druck belastet bleibt.

Vorzugsweise wird ein Glaslot mit einem thermischen Ausdehnungskoeffizienten ausgewählt, der kleiner ist als der thermische Ausdehnungskoeffizient des Materials des Prüfkörpers.

Es kann ein einzelner Ultraschallwandler zur Schallanalyse des Prüfkörpers vorgesehen sein, der sowohl zum Aussenden als auch zum Empfangen von Ultraschallwellen dient. Werden jedoch mehrere Ultraschallwandler eingesetzt, so lässt sich eine akustische Schallanalyse, beispielsweise durch Anregungen von Lamb- oder Rayleigh-Wellen, zur Strukturüberwachung in dem heißen Prüfkörper durchführen und/oder es ist auch eine Ortsauflösung wie voranstehend beschrieben erzielbar.

Mit der erfindungsgemäßen Überwachungseinrichtung lässt sich ein permanentes Überwachungsverfahren zur dauerhaften Überwachung eines Prüfkörpers in dessen Betrieb, auch bei Temperaturen oberhalb von 500° C, insbesondere im Bereich zwischen etwa 650° C und etwa 1000° C, durchführen. Wenngleich die Überwachungsvorrichtung für diesen Temperaturbereich geeignet ist, so ist klar, dass sie auch in Bereichen kleinerer Temperatur arbeitet. Somit kann die Überwachungsvorrichtung in einem weiten Temperaturbereich, auch permanent, eingesetzt werden.

Die Erfindung betrifft auch ein vorteilhaftes Herstellverfahren zum Herstellen der Überwachungsvorrichtung mit den Schritten:
a) Bereitstellen eines Ultraschallwandlers mit einem Hochtemperatur-Piezomaterial,
b) Aufbringen des Ultraschallwandlers auf den Prüfkörper unter Zwischenlage eines Glaslotes, dessen Erweichungstemperatur unterhalb der Schmelztemperaturen des Prüfkörpers und des Hochtemperatur-Piezomaterials und insbesondere zwischen 650°C und 1000°C liegen,
c) Anpressen des Ultraschallwandlers an den Prüfkörper und - vorzugsweise lokales - Erhitzen des Prüfkörpers und des Ultraschallwandlers auf eine Temperatur oberhalb der Erweichungstemperatur des Glaslotes und unterhalb der Schmelztemperatur des Prüfkörpers und des Hochtemperatur-Piezomaterials,
d) Abkühlen des Ultraschallwandlers und des Prüfkörpers auf eine Temperatur unterhalb der Erweichungstemperatur des Glaslotes.

Schritt a) bedeutet nicht, dass die Herstellung des Ultraschallwandlers zusammen mit der Herstellung der Überwachungsvorrichtung einhergehen muss. Der Ultraschallwandler kann zum Beispiel in einem separaten Schritt komplett aufgebaut oder im Markt beschaffen werden, um erst danach auf dem Prüfkörper angebracht zu werden.

Bei der Herstellung der Überwachungsvorrichtung wird vorzugsweise derart vorgegangen, dass der Prüfkörper - beispielsweise mittels eines kleinen Ofens - lediglich lokal erhitzt wird, um die Glaslotverbindung auszuführen. Dabei wird weiter vorzugsweise der Ultraschallwandler - beispielsweise mittels einer speziellen Pressvorrichtung in dem Ofen - an den Prüfkörper gepresst. Vorzugsweise ist der Ofen in der Form, der Kontur und/oder seiner Krümmung dem zu überwachenden Prüfkörper angepasst, so dass er lokal auf dem Prüfkörper angebracht werden kann. Demnach wird gemäß einer vorteilhaften Ausgestaltung des Verfahrens in Schritt c) ein transportabler Ofen mit an die Form des Prüfkörpers angepasster Kontur verwendet, dessen Abmaße kleiner als diejenigen des Prüfkörpers sind. Nach der Herstellung kann der Ofen wieder entfernt werden.
Ausführungsbeispiele der Erfindung werden nachfolgend anhand der beigefügten Zeichnungen näher erläutert. Darin zeigt
- Fig. 1: eine schematische Schnittdarstellung durch eine Ausführungsform eines an einem Prüfkörper angebrachten Ultraschallwandlers;
- Fig. 2: eine schematische perspektivische Ansicht einer Überwachungsvorrichtung zur Strukturüberwachung eines Prüfkörpers;
- Fig. 3: eine schematische Schnittdarstellung eines bei der Herstellung der Überwachungsvorrichtung gemäß Fig. 2 einsetzbaren Ofens;
- Fig. 4: ein Diagramm eines Empfangsspektrums der Überwachungsvorrichtung bei 700° C;
- Fig. 5: ein Diagram eines Empfangssignals bei Einstrahlung eines 130 kHz Pulses.

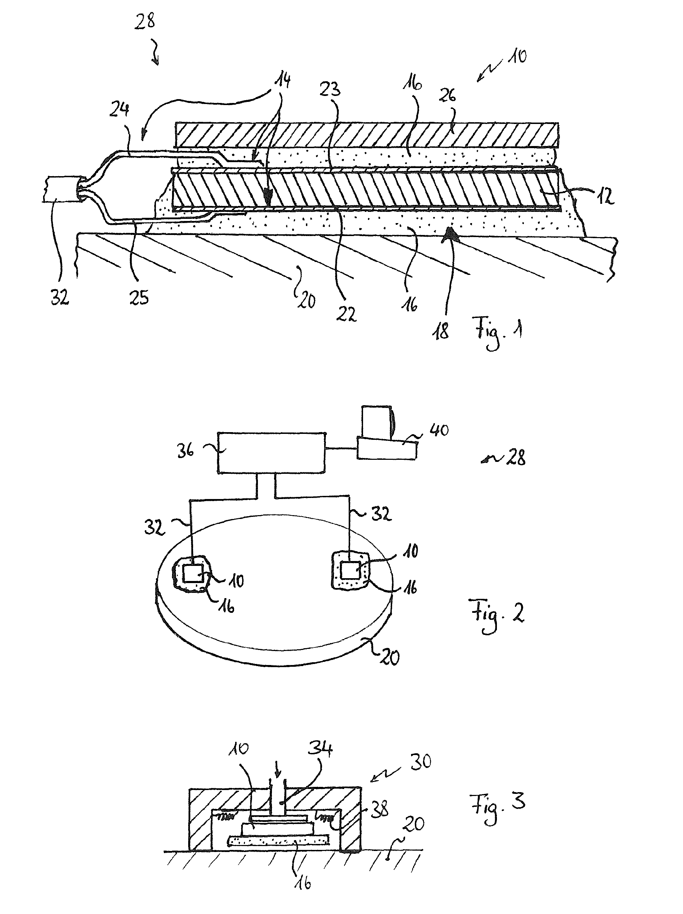

Im Folgenden wird anhand der Darstellung von Fig. 1 der Aufbau eines insgesamt mit 10 bezeichneten Ultraschallwandlers beschrieben. Der Ultraschallwandler 10 kann durch die Verwendung eines speziellen piezoelektrischen Einkristalls 12 als piezoelektrisches Material und durch die Verwendung von Edelmetall-Kontaktierungen 14 mit Hilfe eines Glaslotes 16 auf im Betrieb heiße Bauteile aufgebracht oder integriert werden kann. Das Glaslot 16 bildet eine Glaslotverbindung einer Koppeleinrichtung 18, mit deren Hilfe Ultraschallwandler 10 und Bauteil derart aneinander gekoppelt sind, dass Ultraschallwellen gut zwischen den Verbindungspartnern übertragbar sind. Als Beispiel für ein heißes Bauteil ist ein Prüfkörper 20 - und zwar hier insbesondere in einem beispielhaften Versuchsaufbau zum Testen der Eignung des Ultraschallwandlers 10 für Materialüberwachung an einem Metallbehälter eine Stahlplatte - dargestellt.

In dem dargestellten Beispiel dient als eigentliches piezoelektrisches Wandlermaterial einkristallines Langasit (La₃ Ga₅SiO₁₄), das keinen Phasenübergang bis zu seinem Schmelzpunkt bei 1475° C aufweist. Alternativ können auch La₃Ga_{5.5}Ta_{0.5}O₁₄ oder La₃Ga_{5.5}Nb_{0.5}O₁₄ oder Ca₃Ga₂Ge₄O₁₄ oder GaPO₄ als Hochtemperatur-Piezomaterialien eingesetzt werden. Bei GaPo₄ ist die Einsatztemperatur allerdings auf etwa 800°C eingeschränkt, alle anderen Materialien haben höhere Einsatztemperaturen, zum Teil über 1000°C.

Zur Herstellung der Edelmetall-Kontaktierungen 14 wird der piezoelektrische Einkristall 12 mit Edelmetallelektroden 22, 23 (Gold oder Platin) bedampft, und es werden Edelmetalldrähte 24, 25 an diese Edelmetallelektroden 22, 23 beispielsweise mittels Edelmetallloten angeschweißt, um den elektrischen Kontakt nach außen zu realisieren. Dies kann auch durch Einwalzen, Einpressen oder Anpressen geschehen. Durch die Verwendung von Edelmetallen wird Korrosion bei hohen Temperaturen an Luft vermieden.

Zur mechanischen Fixierung des Ultraschallwandlers 10 an den Prüfkörper 20 und zur Sicherung sowie zur Isolierung der Zuleitung wird ein Glaslot 16 verwendet, das auch den Ultraschall gut übertragen kann. Auf der Rückseite des Ultraschallwandlers 10 wird ein Dämpfungskörper 26 aus Keramik zur Abdämpfung der kurzen Schallpulse ebenfalls mit dem Glaslot 16 angebracht.

Bei der Herstellung einer den Ultraschallwandler 10 aufweisenden Überwachungsvorrichtung 28 zur Strukturüberwachung an dem Prüfkörper 20, welche Überwachungsvorrichtung 28 insgesamt in Fig. 2 dargestellt ist, wird ein spezieller Ofen 30 verwendet, wie er in Fig. 3 dargestellt ist. Wie am besten aus Fig. 2 ersichtlich, weist die Überwachungsvorrichtung 28 in dem hier dargestellten Beispiel zwei Ultraschallwandler 10 auf. Das Ausführungsbeispiel von Fig. 2 stellt einen beispielhaften Versuchsaufbau dar, in dem für jeden Ultraschallwandler 10 Langasit-Kristalle als Hochtemperatur-Piezomaterial verwendet sind. Die Edelmetallelektroden 22, 23 sind beispielsweise als Au-Ti-Elektroden ausgebildet. Die beiden Einkristalle 12 haben in dem beispielhaften Versuchsaufbau eine Fläche von 15 x 15 mm bei einer Dicke von 0,4 mm. Allgemein ist ein flacher Aufbau mit gegenüber der Fläche geringere Dicke bei dem Einkristall 12 bevorzugt. Zum Testen wird ein Ultraschallsignal durch einen Prüfkörper 20, hier in Form einer Stahlplatte mit einem Durchmesser von 252 mm und einer Dicke von 22mm gesendet.

Die elektrische Zuleitung wird in dem Versuchsaufbau durch temperaturfeste Messkabel 32 realisiert. Jedes Messkabel 32 weist zwei gegeneinander isolierte, etwa 0,2 mm starke Nickeldrähte auf, die mit einem Stahlmantel aus Inconel abgeschirmt sind. Die beiden Nickeldrähte sind in Goldplättchen eingewalzt, zwischen denen dann jeweils ein Einkristall 12 platziert worden ist. Die Messkabel sind an eine geeignete Elektronik 36 für die Ultraschallerzeugung und den Signalempfang angeschlossen. Über eine - hier durch eine Datenverarbeitungsanlage, zum Beispiel einen PC, dargestellte - Auswerteeinrichtung 40, beispielsweise mit Anzeigeeinheit, kann dann die Auswertung und/oder Überwachung erfolgen.

Der voranstehende Aufbau beschreibt einen Versuchsaufbau zum Testen der grundsätzlichen Eignung der Überwachungsvorrichtung 28. In der Praxis werden, wie dies anhand der Ausführung gemäße Fig. 1 erläutert worden ist, für einen Dauereinsatzbereich von über 800° C anstelle der Goldplättchen Platinelektroden und anstelle der Nickel-Messkabel Platin-Zuleitungsdrähte verwendet.

Als Koppelmittel, Klebmittel und elektrische Isolationsschicht zur als Prüfkörper 20 eingesetzten Stahlplatte ist ein Glas verwendet. Als Glas wird ein Glas mit einer Erweichungstemperatur ausgewählt, die oberhalb der geplanten Betriebstemperatur liegt, damit der Prüfkörper auch bei Betriebstemperatur durch das Glas an dem Ultraschallwandler fixiert bleibt.

In einem Versuch wurde die gesamte in Fig. 2 dargestellte Überwachungsvorrichtung 28 mit Prüfkörper 20 in einem größeren Ofen (nicht dargestellt) platziert. Der Abstand der Ultraschallwandler 10 zueinander betrug dabei 17 cm.

In der Praxis wird für den Aufbau und die Herstellung der Überwachungsvorrichtung 28 das folgende Verfahren zur Befestigung der Ultraschallwandler 10 an den Prüfkörper 20 vorgeschlagen. In dem in Fig. 3 dargestellten Ofen 30 wird der vorgefertigte Wandleraufbau unter Zwischenlage von Glaslot 16 durch eine mechanische Pressvorrichtung 34 auf den Prüfkörper 20 gepresst, während im Ofen 30 lokal Temperaturen um 1000° C herrschen, um das Glaslot 16 zu schmelzen. Das Glaslot 16 hat hier eine Erweichungstemperatur oberhalb von etwa 650°C bis 800°C, aber unterhalb von etwa 1000°C. In einem Beispiel wurde ein Glaslot mit einer Erweichungstemperatur zwischen 700°C und 900°C eingesetzt.

Die Kontur des in Fig. 3 dargestellten, in der Praxis verwendbaren Ofens 30 ist an die Außenkontur des Prüfkörpers 20 angepasst. Wenn es sich bei dem Prüfkörper 20 um ein Rohr oder einen besonders geformten Behälter handelt, so ist der Ofen 30 an die Rohr- oder Behälterkrümmung angepasst.

Der Ofen 30 ist relativ klein und transportabel. Er ist mit geeigneten Heizeinrichtungen 38 versehen. Beispielhafte Dimensionen (Länge, Breite und Höhe) liegen unterhalb von etwa 50 cm. Beispielsweise hat der Ofen eine Länge von 10 cm, eine Breite von 10 cm und eine Höhe von 20 cm. Mit einem solchen relativ kleinen transportablen Ofen können die Ultraschallwandler 10 an beliebigen Stellen des Prüfkörpers 20 dauerstabil und korrosionsfest befestigt werden.

Im Folgenden wird nun wiederum von dem Versuchsaufbau ausgegangen wie er in Fig. 2 dargestellt ist. Ein Versuchsablauf zum Testen der Überwachungsvorrichtung 28 wird im Folgenden beschrieben.

Um das Glaslot 16 zu schmelzen, wird der Ofen von 30° C auf etwa 900° C erhitzt und nach ca. 30 Minuten auf 700° C abgekühlt. Dann werden bei dieser Temperatur von 700° C alle im folgenden näher erläuterten Messungen durchgeführt.

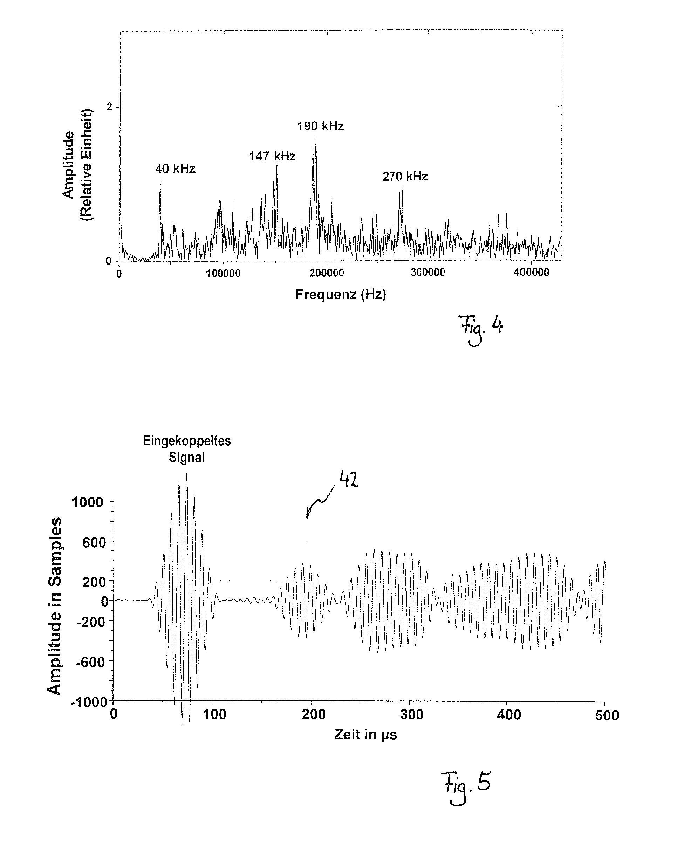

Zur Ermittlung der optimalen Sendefrequenz in der als Prüfkörper 20 eingesetzten Stahlplatte wird ein Sendeimpuls, beispielsweise in Form einer Sinus (Hanning)-Kurveverwendet. Dieses Signal wird durch einen der beiden Ultraschallwandlern 10 in mechanische Schwingungen umgewandelt und über die Koppeleinrichtung 18 in den Prüfkörper eingeleitet. Ein daraufhin mit dem anderen Ultraschallwandler 10 empfangenes Empfangsspektrum bei 700° C ist in Fig. 4 dargestellt.

In dem in Fig. 4 dargestellten Frequenzspektrum des Empfangssignals befindet sich ein Maximum bei 190 kHz. Daraus kann man ableiten, dass bei der hier vorliegenden Überwachungsvorrichtung 28 an dem hier vorliegenden Prüfkörper 20 die beste Signalausbeute bei dieser Frequenz von 190 kHz erhältlich ist. Das Empfangsspektrum besteht aber auch aus Überlagerungen von verschiedenen Moden und Reflexionen von Kanten der als Prüfkörper 20 eingesetzten Stahlplatte.

Fig. 5 zeigt ein Übertragungssignal eines 130 kHz Pulses in der als Prüfkörper 20 eingesetzten Stahlplatte. Das Koppelmittel ist Glas und die Temperatur ist 700°C. Bei 130 kHz sieht man deutlich eine direkt auftreffende Welle 42, obwohl die Signalstärke nicht so hoch wie bei 190 kHz ist.

Durch diese Messungen wird gezeigt, dass es möglich ist, bei hohen Temperaturen Ultraschallsignale in einer Stahlplatte kontinuierlich zu übertragen. Dies ist die Voraussetzung dafür, ein Zustandsüberwachungssystem aufzubauen, das Fehler in sehr heißen Metallbehälter nachweisen kann.

Zuvorstehend ist ein Ultraschallwandler 10 in Form eines Wandler-Einkristalls 12 mit elektrischen Kontakten 22 bis 25 und Dämpfungskörper 26 und einer mechanischen Befestigung mittels Glaslot 16 beschrieben worden, der für den Hochtemperaturbereich bis etwa 1.000°C einsetzbar ist. Der Ultraschallwandler 10 ist kontinuierlich verwendbar - im Gegensatz zu bisher bekannten Ultraschallwandlern, die nur periodisch über kurze Zeiten bei höheren Temperaturen eingesetzt werden konnten. Das Glaslot 16 ist sowohl Ultraschall-Koppelmedium als auch gleichzeitig Befestigungsmedium. Alternativ oder zusätzlich wäre auch eine Befestigung der Ultraschallwandler 10 durch (Keramik-)Federn möglich. Durch entsprechende Auswahl von Glasloten - entscheidend sind Erweichungstemperaturen und der thermische Ausdehnungskoeffizient - können unterschiedliche thermische Ausdehnungskoeffizienten des Prüfkörpers zum Wandler angepasst werden. Beispielsweise wird ein kristallisierendes Glaslost verwendet.

In der Überwachungsvorrichtung 28 kann auch nur ein einzelner Ultraschallwandler 10 verwendet werden, um eine Schallanalyse des Prüfkörpers 20 durchzuführen. Die Ausführung gemäß Fig. 2 mit mehreren Ultraschallwandlern 10 ist bevorzugt, da die mehreren Ultraschallwandler 10 zur akustischen Schallanalyse durch Anregung von Lamb- oder Rayleighwellen zur Strukturüberwachung in heißen Prüfkörpern eingesetzt werden können.

### Bezugszeichenliste:

- 10: Ultraschallwandler
- 12: piezoelektrischer Einkristall (Hochtemperatur-Piezomaterial)
- 14: Edelmetall-Kontaktierung
- 16: Glaslot
- 18: Koppeleinrichtung
- 20: Prüfkörper
- 22: Edelmetallelektrode
- 23: Edelmetallelektrode
- 24: Edelmetalldraht
- 25: Edelmetalldraht
- 26: Dämpfungskörper
- 28: Überwachungsvorrichtung
- 30: Ofen
- 32: Messkabel
- 34: Pressvorrichtung
- 36: Elektronik
- 38: Heizeinrichtung
- 40: Auswerteeinrichtung
- 42: direkt auftreffende Welle

## Patentansprüche

1. Überwachungsvorrichtung (28) zur Überwachung eines Prüfkörpers (20) auf Materialfehler mit einem Ultraschallwandler (10) und einer Koppeleinrichtung (18) zum Koppeln des Ultraschallwandlers (10) an den Prüfkörper (20), um Ultraschallwellen zwischen dem Prüfkörper und dem Ultraschallwandler zu übertragen, **dadurch gekennzeichnet, dass** der Ultraschallwandler (10) ein Hochtemperatur-Piezomaterial (12) aufweist, das dauerhaft bei Temperaturen oberhalb von etwa 650°C einsetzbar ist, wobei die Koppeleinrichtung (18) eine Glas- oder Glaslotverbindung aufweist, die gleichzeitig als Koppelmedium und als mechanische Befestigung dient, mittels der der Ultraschallwandler (10) dauerhaft auch bei Betriebstemperaturen oberhalb von etwa 650°C an dem Prüfkörper (20) befestigbar ist.

2. Überwachungsvorrichtung nach Anspruch 1,
**dadurch gekennzeichnet,**
**dass** das Hochtemperatur-Piezomaterial als Einkristall (12) ausgebildet ist.

3. Überwachungsvorrichtung nach einem der voranstehenden Ansprüche,
**dadurch gekennzeichnet,**
**dass** das Hochtemperatur-Piezomaterial (12) eine Schmelztemperatur und/oder eine Curietemperatur oberhalb von etwa 1000°C hat.

4. Überwachungsvorrichtung nach einem der voranstehenden Ansprüche,
**dadurch gekennzeichnet,**
**dass** das Hochtemperatur-Piezomaterial (12) ausgewählt ist aus einer Gruppe von Hochtemperatur-Piezomaterialien, die
La₃Ga₅SiO₁₄,
La₃Ga_{5.5}Ta_{0.5}O₁₄,
La₃Ga_{5.5}Nb_{0.5}O₁₄,
Ca₃Ga₂Ge₄O₁₄ und
GaPO₄
umfasst.

5. Überwachungsvorrichtung nach einem der voranstehenden Ansprüche,
**dadurch gekennzeichnet,**
**dass** der Ultraschallwandler (10) Elektroden (22, 23) und/oder Kontaktdrähte (24, 25) aus Edelmetall aufweist.

6. Überwachungsvorrichtung nach einem der voranstehenden Ansprüche,
**dadurch gekennzeichnet,**
**dass** der Ultraschallwandler (10) einen Dämpfungskörper (26) zur Abdämpfung kurzer Schallimpulse aufweist.

7. Überwachungsvorrichtung nach Anspruch 6,
**dadurch gekennzeichnet,**
**dass** der Dämpfungskörper (26) auf einer dem Prüfkörper (20) abgewandten Seite mit einer zu der Glas- oder Glaslotverbindung _{[ADM6]}der Koppeleinrichtung (18) gleichartigen Verbindung befestigt ist.

8. Überwachungsvorrichtung nach einem der voranstehenden Ansprüche,
**dadurch gekennzeichnet,**
**dass** das Glaslot (18) einen thermischen Ausdehnungskoeffizienten hat, der kleiner ist als der thermische Ausdehnungskoeffizient des Prüfkörpers (20).

9. Überwachungsvorrichtung nach einem der voranstehenden Ansprüche,
**dadurch gekennzeichnet,**
**dass** eine Mehrzahl der Ultraschallwandler (10) vorgesehen ist, die jeweils mit ihren zugeordneten Koppeleinrichtungen (18) beabstandet zueinander an dem Prüfkörper (20) dauerhaft befestigt sind.

10. Überwachungsverfahren zum Überwachen eines bei Temperaturen oberhalb von etwa 650°C betriebenen oder betreibbaren Prüfkörpers (20) auf Materialfehler,
**dadurch gekennzeichnet,**
**dass** eine dauerhaft an dem Prüfkörper (20) befestigte oder in dem Prüfkörper integrierte Überwachungsvorrichtung (28) nach einem der voranstehenden Ansprüche verwendet wird und
**dass** der Prüfkörper (20) mit der Überwachungsvorrichtung (28) kontinuierlich während dessen bestimmungsgemäßen Betriebs überwacht wird.

11. Überwachungsverfahren nach Anspruch 10,
**dadurch gekennzeichnet,**
**dass** eine Schallanalyse des Prüfköpers (20) mittels eines einzelnen Ultraschallwandlers (10) durchgeführt wird.

12. Überwachungsverfahren nach Anspruch 10,
**dadurch gekennzeichnet,**
**dass** mit mehreren Ultraschallwandlern (10) eine Strukturüberwachung des Prüfkörpers (20) während dessen Betrieb bei Temperaturen oberhalb von etwa 500°C mittels akustischer Schallanalyse durchgeführt wird.

13. Überwachungsverfahren nach Anspruch 12,
**dadurch gekennzeichnet,**
**dass** zur Strukturüberwachung Lamb- oder Rayleigh-Wellen in dem Prüfkörper (20) angeregt werden.

14. Herstellverfahren zum Herstellen einer Überwachungsvorrichtung (28) nach einem der Ansprüche 1 bis 9,
**gekennzeichnet durch**
a) Bereitstellen des Ultraschallwandlers (10) mit dem Hochtemperatur-Piezomaterial (12),
b) Aufbringen des Ultraschallwandlers (10) auf den Prüfkörper (20) unter Zwischenlage des Glaslotes (16), dessen Erweichungstemperatur unterhalb der Schmelztemperaturen des Prüfkörpers (20) und des Hochtemperatur-Piezomaterials (12) liegt,
c) Anpressen des Ultraschallwandlers (10) an den Prüfkörper (20) und - vorzugsweise lokales - Erhitzen des Prüfkörpers (20) und des Ultraschallwandlers (10) auf eine Temperatur oberhalb der Erweichungstemperatur des Glaslotes (16) und unterhalb der Schmelztemperatur des Prüfkörpers (20) und des Hochtemperatur-Piezomaterials (12),
d) Abkühlen des Ultraschallwandlers (10) und des Prüfkörpers (20) auf eine Temperatur unterhalb der Erweichungstemperatur des Glaslotes (16).

15. Herstellverfahren nach Anspruch 14,
**dadurch gekennzeichnet,**
**dass** in Schritt c) ein transportabler Ofen (30) mit an die Form des Prüfkörpers (30) angepasster Kontur verwendet wird, dessen Abmaße kleiner als diejenigen des Prüfkörpers (20) sind.
